# EUROPEAN PATENT APPLICATION

(11) **EP 1 849 592 A1**
(43) Date of publication of application: **31.10.2007**
(21) Application number: 06705632.5
(22) Date of filing: 13.02.2006
(51) Int. Cl.: B32B 3/12

(54) **PLASTIC HONEYCOMB COMPOSITE BOARD WITH CURVED SURFACE**

(30) Priority: 18.02.2005 CN 200510042478
(71) Applicant: Leng, Luhao, Xiamen, Fujian 361009 (CN)
(72) Inventor: Leng, Luhao, Xiamen, Fujian 361009 (CN)
(74) Representative: Stuttard, Garry Philip
(86) International application number: PCT/CN2006/000211
(87) International publication number: WO 2006/086925

(57) **Abstract**

A plastic honeycomb composite board with curved surface comprises a plastic curved surface plate and a plastic bottom plate. The surface plate joints the bottom plate with edges. At least a honeycomb paper core is positioned between the surface plate and the bottom plate. The board further contains a plastic foam filler In the profile space formed between the plastic curved surface and the honeycomb paper core. The composite board of the invention meets the need of application and overcomes the biased view that a plastic honeycomb composite board cannot have a profile curved surface.

## Description

### Field of the Invention

The invention concerns a plastic composite board, specifically a plastic honeycomb composite board with a curved surface.

### Background of Techniques

Boards are widely applied to furniture manufacturing industry whose current techniques include a variety of board use. Strength of a board and interconnected structures between boards are key factors defining its bearing capacity and stability.

Conventional wood boards and particle boards have following disadvantages which are difficult to overcome: 1) they cost too much wood for manufacture, thus bring serious damage to forests; 2) the manufacturing process is more work-consuming, since most of them are bonded by tenon structures or groove structures and fixed by gluing, costing more time and work; 3) they are weak in strength. Their strengths are greatly reduced due to the process of drilling, broaching grooves and tenonning, and cracks or deformations are more likely appears at joints. Therefore, conventional wood boards and particle boards are less and less adopted.

Plastic composite boards are more and more applied to furniture manufacture; the inventor has applied for several patents concerning plastic composite board. For instance, Patent CN02135460.X "A New Composite Board and its Processing Techniques" reveals a composite board comprising a honeycomb, a plastic foam filler and inner-fixed parts; the honeycomb consists of honeycomb paper, surface paper and bottom paper, the honey paper is glued between the surface paper and the bottom paper; the layer of plastic foam filler covers or partially covers the outer surfaces of both the honeycomb and inner-fixed parts, thus the honeycomb, inner-fixed parts and the plastic foam filler are integrated as a whole.

For another example, Patent 200320106050 "A Multifunctional Frame Plastic-suction Honeycomb Composite Board" reveals an invention consisting of a composite board and edge connectors; the composite board includes a bottom plate, a surface plate and a paper honeycomb; the paper honeycomb is glued between the surface and the bottom plates; the edge connectors, as reinforcing frames and bonding structures, cover all four edges of the paper honeycomb or part of its edges. The joints between edge connectors and either the surface plate or the bottom plate are bonded by gluing or welding.

The aforementioned plastic composite boards are with distinguishing features, however, since each of their surfaces are flat, they cannot match some occasions on which boards with a curved surface are required, for example, for manufacturing waiting-hall seats, whose chair-backs, chair-surfaces and handrails are needed to be designed as curved surfaces according to Ergonomic principles.

### Description of the Invention

The invention presents a plastic honeycomb composite board with a curved surface. The main purpose of the invention is to overcome the aforementioned disadvantage of current plastic composite boards with a flat surface, which cannot match some occasions on which boards with a curved surface are required.

Following techniques are adopted: a plastic honeycomb composite board with a curved surface, which comprises: a curved plastic surface plate and a plastic bottom plate, the surface and the bottom plates are jointed by edges, forming a enclosed spaces in between; one layer of honeycomb paper core at least, which is laid between the plastic surface and the bottom boards, between the layer and the curved plastic surface plate, a heterotypic space is formed; one plastic foam filler at least, which is stuffed in the heterotypic space between the layer of honeycomb paper core and the curved plastic surface plate.

Inner-fixed parts are buried within the composite board, the structure may comprise: 1) inner-fixed parts which are buried between the layer of honeycomb paper core and a jut, which is formed by downward projecting of the aforementioned plastic bottom plate; 2) inner-fixed part s which are buried at joints between outer edges of the aforementioned honeycomb paper core and edges of the aforementioned plastic surface or bottom plate.

The aforementioned inner-fixed parts may be compounds consisting of one or several among pipe fittings, profiles, interjection molded parts and ironware.

The concrete structures of the inner-fixed parts may include: 1) pipe fittings or profiles form an enclosed frame, while the aforementioned interjection molded parts or ironware being used as reinforcing parts, which are fixed at the corners of the frame by clamping, threat connecting, or welding; 2) pipe fittings or profiles may also form a U-frame, or a II-frame, or a H-frame, while the aforementioned interjection molded parts or ironware being used as reinforcing parts, which are fixed at the corners of the frame by clamping, threat connecting, or welding.

The aforementioned plastic surface plate is with a depressed or a projected curved surface.

The structure of the composite board may also be as follow: there are two layers of honeycomb paper core, the edges of upper layer is inwardly recessed comparing to the edges of bottom layer; the surface of the aforementioned surface plate should comprise a planar part which is parallel to the upper layer of honeycomb paper core, and a cone surface which is formed by downward extension of the edges of the planar part to the edges of the bottom layer of honeycomb paper core. The aforementioned plastic foam filler is laid within the space formed among the cone surface, the outer edges of the upper layer of honeycomb paper core and the upper edges of the bottom layer of honeycomb paper core.

The aforementioned plastic surface plate and bottom plate may be plastic suction boards, plastic blow-molding boards or hot-pressed plastic boards.

The edge of the aforementioned plastic surface plate is bent downwardly while the edge of the bottom plate upwardly, the bent edge frames are overlapped and jointed together, the joint is enclosedly fixed by ultrasonic welding or gluing.

The edges of the aforementioned plastic surface and the bottom plates together take form of squares, rectangles, rounds, ovals or special shapes.

It could be concluded from the aforementioned descriptions that the invention adopts a structure which stuff the curved plastic surface plate and plastic bottom plate in between with plastic foam fillers and honeycombs paper core layers combiningly. The structure creatively realized a plastic honeycomb composite board with a special-shaped surface, so that it can meet related requirements for certain occasions, and overcomes the long-held bias among many specialists that the realization of a special-shaped surface for any plastic honeycomb composite board is of little possibility.

### Brief Description of the attached drawings

Figure 1 is a longitudinal profile showing the Implement Example 1 of the invention
Figure 2 is a partial profile partially showing the B-B section in Figure I
Figure 3 is a longitudinal profile showing the Implement Example 2 of the invention
Figure 4 is a partial profile partially showing the A-A section in Figure 3
Figure 5 is a longitudinal profile showing the Implement Example 3 of the invention

### Implement Examples

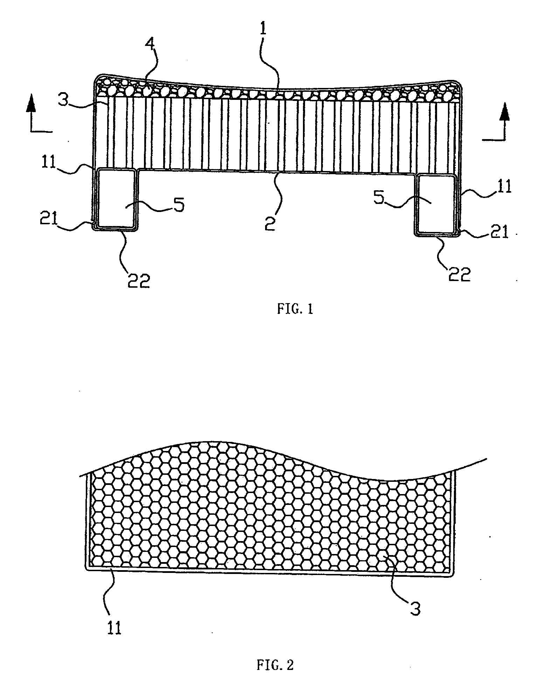

As shown in Figure 1 & 2, the concrete implement example 1 is a plastic honeycomb composite board with a curved surface, comprising a plastic surface plate 1, and a plastic bottom plate 2, plate 1 is a curved plate which is slightly depressed downwardly, the shape of which is suitable for making chair-backs. The edge I 1 of the plate I is bent downwardly while the edge 21 of the plate 2 upwardly, the bent edge frames are overlapped and jointed together, the joint is enclosedly fixed by ultrasonic welding or gluing to form an enclosed space inside, where a honeycomb paper core layer 3 is laid. Between the surface of the layer 3 and the inner side surface of plastic plate 1, a heterotypic space is formed, where a plastic foam filler 4 is stuffed. The bottom surface of the layer 3 and the plastic bottom plate 2 are closely jointed together.

Plastic plate 2 is downwardly projected to form a jut 22, between the inner side surface of the jut and honeycomb paper core layer 3, a inner-fixed part 5 is buried, which may be a compound consisting of one or several among pipe fittings, profiles, interjection molded parts and ironware; pipe fittings or profiles may form an enclosed frame, while interjection molded parts or ironware being used as reinforcing parts, which are fixed at the corners of the frame by clamping, threat connecting, or welding to increase the shock resistance ability of the corners and to work as connectors; pipe fittings or profiles may also form a U-frame, or a 11-frame, or a H-frame, while the aforementioned interjection molded parts or ironware being used as reinforcing parts, which are fixed at the corners of the frame by clamping, threat connecting, or welding.

The plastic surface plate 1 and the plastic bottom plate 2 may be plastic suction boards, plastic blow-molding boards or hot-pressed plastic boards; the edges may together take form of squares, rectangles, rounds, ovals or special shapes, while not being confined to any particular one.

Since the invention skillfully combines the plastic foam filler 4 and the honeycomb paper core layer 3 to stuff the space formed between the curved plastic surface plate 1 and plastic bottom plate 2, it efficiently use the advantages of honeycomb paper core layer 3, such as high strength in vertical directions, and less material use; besides, it overcomes the difficulty that the upper surface of the honeycomb paper core layer 3 is hard to be processed as special-shaped curved surface, so that the plastic honeycomb composite board with a curved surface is of high applicability.

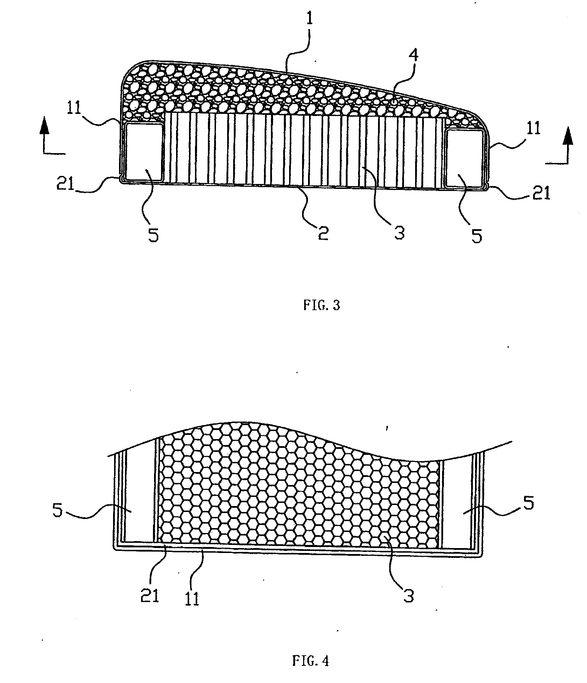

As shown in Figure 3 & 4, the Implement Example 2 includes a plastic surface plate 1 and a plastic bottom plate 2, plate 1 is a curved plate which is slightly projected upwardly with one side higher than the other, the shape of which is suitable for making handrails. The edge 1 of the plate 1 is bent downwardly while the edge 21 of the plate 2 upwardly, the bent edge frames are overlapped and jointed together to form an enclosed space

The bottom surface of the honeycomb paper core layer 3 is bonded to the plastic bottom plate 2, the inner-fixed part 5 is fixed at both edges; a heterotypic space is formed between the upper surface of the honeycomb paper core layer 3 and the inner side surface of the curved plastic surface plate, within the space, the plastic foam filler is stuffed.

Other structures are the same with Implement Example 1.

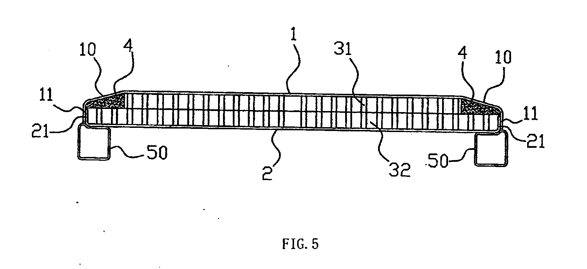

As shown in Figure 5, the Implement Example 3, the plastic surface plate I of the plastic honeycomb composite board is basically planar, the edges of which are extended downwardly to form a cone surface; there are two layers of the honeycomb paper core, 31 and 32, the edges of the upper layer 31 is inwardly recessed comparing to the edges of bottom layer 32; the curved surface of the plastic surface plate I should comprise a planar part which is parallel to the upper layer 32, and cone surface 10 which is formed by downward extension of the edges of the planar part to the edges of the bottom layer 32. The plastic foam filler 4 is laid within the space formed among the cone surface 10, the outer edges of the upper layer 31 of honeycomb paper core and the upper edges of the bottom layer 32 of honeycomb paper core. For this composite board, most parts of its surface plate are planar, while cone surface is formed at edges; the shape of the board matches certain occasions where related needs exist, like for making desk panels. There is no inner-fixed part between the plastic surface plate I and the plastic bottom plate 2; instead, the reinforcing bar is fixed at the bottom edges of the plastic bottom plate 2 for supporting use.

What are presented above are only several implement examples, not covering the whole design and conception, any unessential alterations or modifications to the invention by adopting the conception should be defined as violations against protection scopes of the invention.

### INDUSTRIAL APPLICABILITY

This invention relates to a plastic honeycomb composite board with a curved surface. The invention skillfully combines the plastic foam filler 4 and the honeycomb paper core layer 3 to stuff the space formed between the curved plastic surface plate I and plastic bottom plate 2, it efficiently use the advantages of the honeycomb paper core layer 3, such as high strength in vertical directions, and less material use; besides, it overcomes the difficulty that the upper surface of the honeycomb paper core layer 3 is hard to be processed as special-shaped curved surface, so that the plastic honeycomb composite board with a curved surface is of high applicability. Furthermore, the manufacture of the board is easy, so that it can meet the demand of mass industrial production, thus is of high industrial applicability.

## Claims

1. A plastic honeycomb composite board with a curved surface comprising:
a curved plastic surface plate and a plastic bottom plate, the surface and the bottom plates are jointed by edges, forming a enclosed spaces in between; one layer of honeycomb paper core at least, which is laid between the plastic surface and the bottom boards, between the layer and the curved plastic surface plate, a heterotypic space is formed; one plastic foam filler at least, which is stuffed in the heterotypic space between the layer of honeycomb paper core and the curved plastic surface plate.
2. As described in claim 1, a plastic honeycomb composite board with a curved surface, the aforementioned plastic bottom plate is downwardly projected to form a jut, between the jut and the layer of honeycomb paper core, an inner-fixed part which is buried
3. As described in claim 1, a plastic honeycomb composite board with a curved surface, an inner-fixed part which is buried between joints between outer edges of the aforementioned honeycomb paper core and edges of the aforementioned plastic surface or bottom plate.
4. As described in claims 2 or 3, a plastic honeycomb composite board with a curved surface, the aforementioned inner-fixed parts may be compounds consisting of one or several among pipe fittings, profiles, interjection molded parts and ironware.
5. As described in claim 4, a plastic honeycomb composite board with a curved surface, the aforementioned pipe fittings or profiles form an enclosed frame, while the aforementioned interjection molded parts or ironware being used as reinforcing parts, which are fixed at the corners of the frame by clamping, threat connecting, or welding;
6. As described in claim 4, a plastic honeycomb composite board with a curved surface, the aforementioned pipe fittings or profiles form a U-frame, or a II-frame, or a H-frame, while the aforementioned interjection molded parts or ironware being used as reinforcing parts, which are fixed at the corners of the frame by clamping, threat connecting, or welding.
7. As described in claim 1, a plastic honeycomb composite board with a curved surface, the aforementioned plastic surface plate is with a depressed or a projected curved surface.
8. As described in claim 1, a plastic honeycomb composite board with a curved surface, there are two layers of honeycomb paper core, the edges of upper layer is inwardly recessed comparing to the edges of bottom layer; the surface of the aforementioned surface plate should comprise a planar part which is parallel to the upper layer of honeycomb paper core, and cone surfaces which are formed by downward extension of the edges of the planar part to the edges of the bottom layer of honeycomb paper core. The aforementioned plastic foam filler is laid within the space formed among the cone surfaces, the outer edges of the upper layer of honeycomb paper core and the upper edges of the bottom layer of honeycomb paper core.
9. As described in claim 1, a plastic honeycomb composite board with a curved surface, the aforementioned plastic surface plate and bottom plate may be plastic suction boards, plastic blow-molding boards or hot-pressed plastic boards.
10. As described in claim 1, a plastic honeycomb composite board with a curved surface,the edge of the aforementioned plastic surface plate is bent downwardly while the edge of the bottom plate upwardly, the bent edge frames are overlapped and jointed together, the joint is hermetically fixed by ultrasonic welding or gluing.
11. As described in claim 1, a plastic honeycomb composite board with a curved surface, the edges of the aforementioned plastic surface plates and the plastic bottom plates can be chosen from squares, rectangles, rounds, ovals or special shapes.
